# EUROPÄISCHE PATENTSCHRIFT

(11) **EP 1 205 320 B1**
(45) Veröffentlichungstag und Bekanntmachung des Hinweises auf die Patenterteilung: **13.05.2009**
(21) Anmeldenummer: 01126096.5
(22) Anmeldetag: 02.11.2001
(51) Int. Cl.: B60H 1/00, B60H 1/34

(54) **Strömungskanalklappe**
Damper for a flow duct
Clapet pour un tuyau d'écoulement

(30) Priorität: 09.11.2000 DE 10056670
(43) Veröffentlichungstag der Anmeldung: 15.05.2002
(73) Patentinhaber: Behr GmbH & Co. KG, 70469 Stuttgart (DE)
(72) Erfinder: Ross, Reinhold, 71701 Schwieberdingen (DE)

(56) Entgegenhaltungen:
- EP-A- 0 680 839
- EP-A- 0 732 231
- DE-A- 2 534 652
- DE-A- 19 752 260
- FR-A- 2 763 286

## Beschreibung

Die Erfindung bezieht sich auf eine Strömungskanalklappe nach dem Oberbegriff des Anspruchs 1. Bei dieser Strömungskanalklappe ist ein zugehöriger Klappenflügel durch Betätigungsmittel zwischen einer den Strömungskanal absperrenden Schließposition und einer diesen freigebenden Position bewegbar. Dabei wird der Klappenflügel durch Kulissenführungsmittel geführt, wobei die Kulissenführungsmittel und die Betätigungsmittel so ausgelegt sind, dass der Klappenflügel beim Verbringen von der Schließposition in die Freigabeposition und umgekehrt jeweils eine kombinierte Transversal- und Schwenkbewegung ausführt und sich, wenn er seine Freigabeposition einnimmt, seitlich neben der von ihm absperrbaren Kanalöffnung befindet. Derartige Klappen sind beispielsweise in Strömungskanälen von Fahrzeugklimatisierungseinrichtungen, wie Heizungs- und Klimaanlagen, verwendbar.

In der Offenlegungsschrift FR 2 763 286 A1 ist eine Strömungskanalklappe dieser Art für eine Fahrzeugklimatisierungseinrichtung offenbart. Bei der dort gezeigten Klappe beinhalten die Kulissenführungsmittel zwei getrennte, gekrümmt verlaufende, kanalgehäuseseitige Kulissenbahnen, von denen sich die eine hauptsächlich entlang eines Seitenbereichs der von der Klappe absperrbaren Kanalöffnung und die andere quer dazu entlang eines seitlich neben der Öffnung liegenden Bereichs erstreckt, in welchem sich der Klappenflügel in seiner Freigabeposition befindet. Des weiteren beinhalten die Kulissenführungsmittel zwei Kulissenzapfen, die in je eine der beiden Kulissenbahnen eingreifen, an sich bezüglich der Klappenflügel-Bewegungsrichtung gegenüberliegenden Seitenbereichen des Klappenflügels. Ein dritter Kulissenzapfen am Klappenflügel greift in eine als Langloch gestaltete Kulissenbahn ein, die in einen Schwenkarm eingebracht ist, über den der Klappenflügel betätigt wird, wobei die zugehörigen Betätigungsmittel des weiteren einen mit dem Schwenkarm drehfest gekoppelten Zahnradsektor und eine mit letzterem zusammenwirkende Zahnstange umfassen. Die Betätigungs- und Kulissenführungsmittel sind so aufeinander abgestimmt, dass sich der Klappenflügel aus der Absperrposition zunächst mit einer zur Ebene der abgesperrten Öffnung parallelen Hauptkomponente von öffnungsrandseitigen Anschlägen wegbewegt, wonach dann zunehmend die Schwenkbewegungskomponente einsetzt.

In der Patentschrift EP 0 732 231 B1 ist eine Strömungskanalklappe gemäß dem Oberbegriff des Anspruchs 1 offenbart, die als Frischluft/Umluft-Klappe einer Fahrzeugklimatisierungseinrichtung dient, wobei ihr Klappenflügel zwischen einer Stellung, in der er einen Frischluft-Ansaugkanal absperrt, und einer Stellung, in der er einen Umluft-Ansaugkanal absperrt, in einer kombinierten Transversal- und Schwenkbewegung verstellbar ist. Dies erfolgt so, dass ein einem Luftansauggebläse zugewandter Seitenbereich des Klappenflügels eine im wesentlichen geradlinige Bewegung ausführt und sich dadurch ständig sehr nahe an dem Gebläse entlangbewegt. Dazu ist der Klappenflügel an seinem gegenüberliegenden Seitenbereich mit einer Kulissenbahn versehen, in die an zwei gegenüberliegenden Gehäuseseiten je ein gehäuseseitiger Zapfen eingreift. In Verlängerung der Kulissenbahn ist der Klappenflügel an einem Schwenkarm angelenkt, wozu ein klappenflügelseitiger Zapfen in eine Langlochführung im freien Endbereich des Schwenkarms eingreift. Gleichzeitig greift der klappenflügelseitige Zapfen in eine gehäuseseitige Kulissenbahn ein, die von einer im wesentlichen kreisrunden Form ist.

Der Erfindung liegt als technisches Problem die Bereitstellung einer Strömungskanalklappe der eingangs genannten Art zugrunde, die sich mit einer vorteilhaften Bewegungskinematik zwischen ihrer Schließ- und ihrer Freigabeposition bewegen lässt, vorzugsweise ohne störende Reibwiderstände zwischen Gehäuse und Klappenflügel, und bei der sich der Klappenflügel mit relativ geringem Kraftaufwand in der Schließposition halten lässt.

Die Erfindung löst dieses Problem durch die Bereitstellung einer Strömungskanalklappe mit den Merkmalen des Anspruchs 1.

Bei der Strömungskanalklappe nach Anspruch 1 sind die Betätigungs- und die Kulissenführungsmittel speziell so ausgelegt, dass sie den Klappenflügel bei Betätigen aus seiner Absperrposition zunächst mit einer zur Kanalöffnung senkrechten Hauptkomponente der kombinierten Transversal-/Schwenkbewegung herausbewegen, wobei es sich um eine Transversal- oder Schwenkbewegungskomponente senkrecht zur Kanalöffnungsebene handeln kann. Dies hat zum einen den Vorteil, dass sich Reib-widerstände zwischen Gehäuse und Klappenflügel beim Herausbewegen des Klappenflügels aus seiner Schließposition minimal halten lassen, und schafft zum anderen die Voraussetzung dafür, dass sich der Klappenflügel mit relativ geringem Kraftaufwand in der Schließposition halten lässt, da die Kraftübertragungsrichtung zwischen den Betätigungsmitteln und dem Klappenflügel eine zur Kanalöffnungsebene senkrechte und damit zum Strömungsdruck auf den Klappenflügel parallele Hauptkomponente aufweist.

Dabei ist eine spezielle Gestaltung der Kulissenführungsmittel und der Betätigungsmittel derart vorgesehen, dass ein in Richtung Freigabeposition hinterer Bereich des Klappenflügels durch die Kulissenführungsmittel im wesentlichen linear geführt wird, während die Betätigungsmittel an einem davon beabstandeten, vorderen Klappenflügelbereich angreifen. Diese Gestaltung lässt sich mit geringem Aufwand realisieren und ermöglicht eine relativ einfache Bewegungskinematik, die ein vollständiges Herausbewegen des Klappenflügels aus dem Kanalöffnungsquerschnitt erlaubt.

In einer vorteilhaften Ausgestaltung der Erfindung nach Anspruch 2 beinhalten die Betätigungsmittel einen Schwenkarm, an dessen freies Ende der Klappenflügel drehbeweglich angelenkt ist, was eine gleichzeitig einfache und bezüglich der Bewegungskinematik günstige Gestaltung darstellt. Alternativ zu einer direkten derartigen Anlenkung kann der Klappenflügel indirekt über einen Verbindungshebel an den drehbeweglichen Schwenkarm angelenkt sein, wie im Anspruch 3 angegeben. Bei dieser Realisierung ist weiterhin eine Auslegung gemäß Anspruch 4 von Vorteil, bei welcher der Schwenkarm und der Verbindungshebel eine gestreckte Stellung zueinander einnehmen, wenn sich der Klappenflügel in der Schließposition befindet, was wiederum die erforderlichen Gegenhaltekräfte minimiert und eine zur Kanalöffnungsebene im wesentlichen senkrechte anfängliche Schwenkbewegungskomponente des Klappenflügels beim Herausbewegen desselben aus seiner Schließposition ermöglicht.

In einer Weiterbildung der Erfindung nach Anspruch 5 beinhalten die Betätigungsmittel eine Zahnrad-Zahnstangen-Kopplung, in die gleichzeitig eine weitere Kulissenführung integriert ist. In Ausgestaltung dieser Realisierung gemäß Anspruch 6 weist die weitere Kulissenführung eine L-Form auf, die bewirkt, dass der Klappenflügel beim Herausbewegen aus seiner Schließposition zunächst primär verschwenkt wird, und zwar im wesentlichen senkrecht zur Kanalöffnungsebene, bevor eine merkliche Transversalbewegungskomponente einsetzt.

Vorteilhafte Ausführungsformen der Erfindung sind in den Zeichnungen dargestellt und werden nachfolgend beschrieben. Hierbei zeigen:
- Fig. 1: eine Perspektivansicht einer in einen Frischluftkanal einer Fahrzeugklimatisierungseinrichtung eingebauten Strömungskanalklappe mit Schwenkarmbetätigung,
- Fig. 2: eine Seitenansicht der Klappe von Fig. 1 in geschlossenem Zustand,
- Fig. 3: eine Seitenansicht der Klappe von Fig. 1 in teilweise geöffnetem Zustand,
- Fig. 4: eine Seitenansicht der Klappe von Fig. 1 in vollständig geöffnetem Zustand,
- Fig. 5: eine Ansicht entsprechend Fig. 1, jedoch für eine Klappenvariante mit Zahnstangenbetätigung,
- Fig. 6: eine Seitenansicht der Klappe von Fig. 5 in geschlossenem Zustand,
- Fig. 7: eine Seitenansicht der Klappe von Fig. 5 in teilweise geöffnetem Zustand,
- Fig. 8: eine Seitenansicht der Klappe von Fig. 5 in vollständig geöffnetem Zustand,
- Fig. 9: eine Seitenansicht einer Frischluftkanalklappe, die über einen Schwenkarm und einen zusätzlichen Verbindungshebel betätigt wird, in geschlossenem Zustand,
- Fig. 10: eine Seitenansicht der Klappe von Fig. 9 in einer etwas von der Schließposition wegbewegten Stellung und
- Fig. 11: eine Seitenansicht der Klappe von Fig. 9 in vollständig geöffneter Stellung.

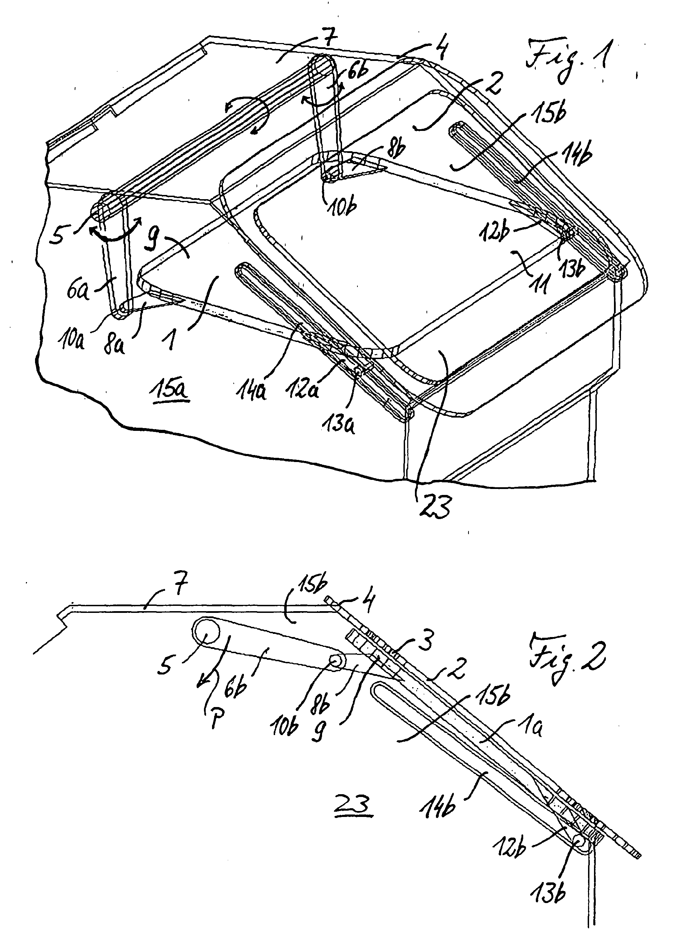

Die Fig. 1 bis 4 zeigen eine Strömungskanalklappe, die als Frischlufteintrittsklappe einer Heizungs- oder Klimaanlage eines Fahrzeugs fungiert und durch eine Schwenkarmanordnung betätigbar ist. Die Klappe beinhaltet einen beweglichen Klappenflügel 1 zur wahlweisen Absperrung oder Freigabe einer Frischlufteintrittsöffnung 2 eines Frischluftkanals 23. Der Klappenflügel 1 ist etwas größer als der Querschnitt der von ihm absperrbaren Öffnung 2 und liegt in einer in Fig. 2 gezeigten Schließposition 1a an allen seinen vier Randseiten von innen gegen den Rand 3 der Öffnung 2 an, der ebenso wie die den Frischluftkanal 23 im übrigen definierenden Wandungen durch entsprechende Gestaltung eines zugehörigen Frischluftkanalgehäuses 4 gebildet ist.

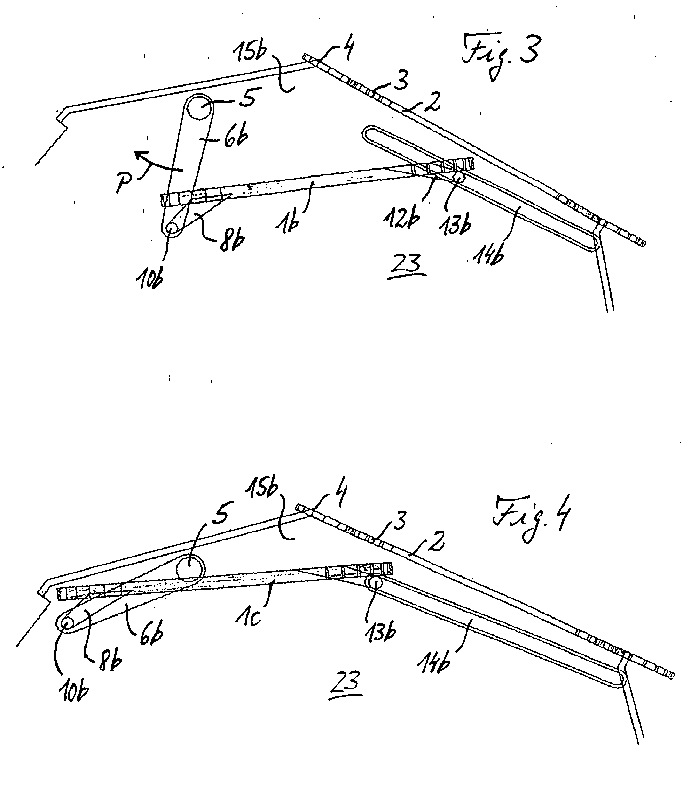

Der Klappenflügel 1 ist zwischen seiner die Öffnung 2 vollständig absperrenden Schließposition 1a und einer in Fig. 4 gezeigten, die Öffnung 2 vollständig freigebenden Freigabeposition 1c, in welcher sich der Klappenflügel seitlich oben außerhalb des Öffnungsquerschnitts befindet, durch eine kombinierte Transversal- und Schwenkbewegung verstellbar, die durch hierzu geeignet gewählte Betätigungs- und Kulissenführungsmittel definiert wird. Speziell sind hierfür in diesem Beispiel Betätigungsmittel vorgesehen, die eine in nicht näher gezeigter, herkömmlicher Weise benutzerbetätigbare Welle 5 beinhalten, die sich quer entlang der Innenseite einer oberen Kanalgehäusewandung 7 erstreckt und auf der zwei sich gegenüberliegende Schwenkarme 6a, 6b drehfest montiert sind. Der Klappenflügel 1 ist über je einen Fortsatz 8a, 8b an einem Anlenkseitenbereich 9 beidseits in Form einer Gelenkverbindung 10a, 10b am freien Ende des jeweiligen Schwenkarms 6a, 6b angelenkt. Bei diesem Anlenkseitenbereich 9 des Klappenflügels 1 handelt es sich um den in Richtung Freigabeposition 1c vorderen der vier Flügelseitenbereiche.

An dem in Richtung Freigabeposition 1c hinteren Flügelseitenbereich 11 ist der Klappenflügel 1 beidseits mit je einem Fortsatz 12a, 12b versehen, von dem quer nach außen ein jeweiliger Kulissenzapfen 13a, 13b absteht. Die beiden Kulissenzapfen 13a, 13b greifen in je eine geradlinige Kulissenbahn 14a, 14b ein, die an zwei gegenüberliegenden Querbegrenzungswänden 15a, 15b eingebracht sind und mit den zusammenwirkenden Kulissenzapfen 13a, 13b die Kulissenführungsmittel bilden. Die beiden Kulissenbahnen 14a, 14b verlaufen annähernd parallel, d.h. unter einem Winkel von weniger als etwa 10°, zur Ebene der abzusperrenden Frischluftöffnung 2 mit geringem Abstand von dieser.

Die mit diesen Betätigungs- und Kulissenführungsmitteln bewirkte Bewegungskinematik lässt sich aus den Fig. 2 bis 4 gut erkennen, welche den Klappenflügel 1 in den beiden Endstellungen und einer Zwischenstellung zeigen. In der Schließposition 1a gemäß Fig. 2 drücken die Betätigungsmittel über die Schwenkarme 6b den Klappenflügel gegen den Rand 3 der abzusperrenden Öffnung 2 sicher an und halten dabei auch einem eventuellen Staudruck stand, der auf den Klappenflügel in seiner Schließposition 1a speziell bei hohen Fahrgeschwindigkeiten des Fahrzeugs einwirken kann. Zum Öffnen, d.h. Herausbewegen des Klappenflügels aus seiner Schließposition 1a werden die Welle 5 und damit die beiden Schwenkarme 6a, 6b in der durch einen Schwenkpfeil P angezeigten Richtung verschwenkt. Dies führt dazu, dass sich der Klappenflügel aus seiner Schließposition 1a im wesentlichen senkrecht zur Ebene der Öffnung 2 und damit ohne störende Reibwiderstände vom Öffnungsrand 3 wegbewegt, und zwar hauptsächlich mit einer Schwenkbewegungskomponente, bei der die Kulissenzapfen 13a, 13b als Momentandrehpunkte fungieren. Dieser hauptsächlichen anfänglichen Schwenkbewegungskomponente ist eine zunächst nur geringfügige Transversalbewegungskomponente der beiden Kulissenzapfen 13a, 13b längs ihrer Kulissenbahnen 14a, 14b überlagert. Mit zunehmender weiterer Schwenkbewegung der Schwenkarme 6a, 6b nimmt der transversale Bewegungsanteil zu, während der Schwenkbewegungsanteil abnimmt.

Fig. 3 zeigt die Klappe in einer ungefähr halb geöffneten Stellung, in welcher die Kulissenzapfen 13a, 13b bereits über die Hälfte der Kulissenbahnlänge zurückgelegt haben. Im weiteren Verlauf der Klappenbewegung bis zum Erreichen der vollständig geöffneten Stellung, d.h. der Freigabeposition 1c des Klappenflügels wird letzterer hauptsächlich transversal mit nur noch geringem Schwenkbewegungsanteil bewegt. Wie aus Fig. 4 ersichtlich, befindet sich der Klappenflügel, wenn er sich in seiner Freigabeposition 1c befindet, vollständig außerhalb des Öffnungsquerschnitts der Frischluftöffnung 2. Das vollständige Wegbewegen des Klappenflügels 1 in die Freigabeposition 1c seitlich neben der Öffnung 2 erlaubt somit eine optimale Nutzung des Öffnungsquerschnitts, was im Hinblick auf den meist knapp bemessenen Bauraum für solche Frischluft-Absperrklappen von Fahrzeugklimatisierungseinrichtungen günstig ist. Da sich der Klappenflügel in geöffnetem Zustand außerhalb des durch die Öffnung 2 hindurchtretenden Luftstroms befindet, verursacht er keinen Querschnittsverlust und auch keine störenden Strömungsgeräusche. Andererseits sperrt der Klappenflügel in seiner Schließposition 1a die Öffnung 2 sicher ab.

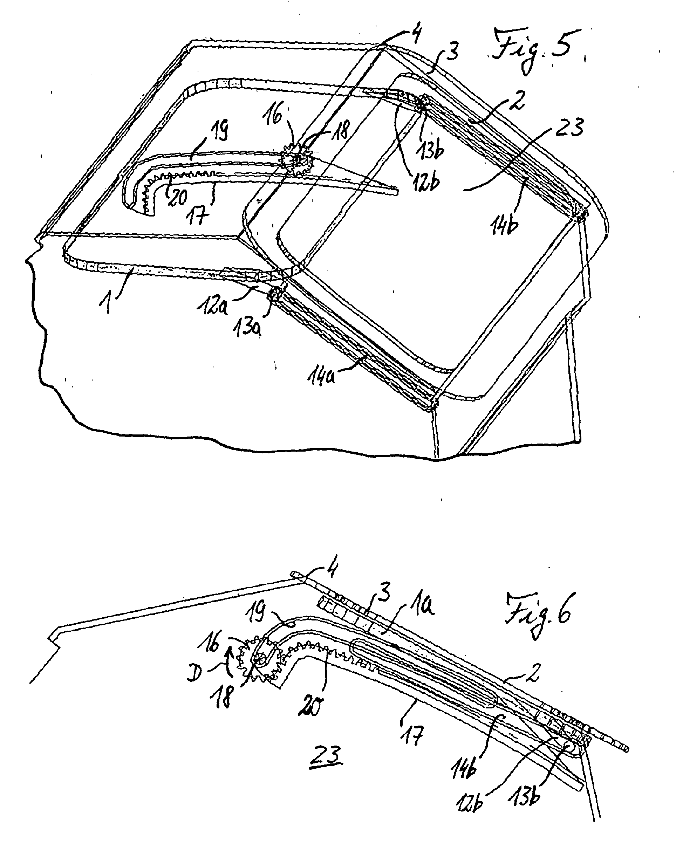

Die Fig. 5 bis 8 zeigen ein weiteres Ausführungsbeispiel, das sich von demjenigen der Figuren 1 bis 4 in der Art der Betätigungsmittel unterscheidet. Im übrigen entsprechen sich die beiden Klappenanordnungen, so dass insoweit für die sich funktionell entsprechenden Komponenten gleiche Bezugszeichen verwendet sind und bezüglich der Beschreibung dieser Komponenten und ihrer Funktion auf die obige Beschreibung zu den Figuren 1 bis 4 verwiesen werden kann.

Beim Ausführungsbeispiel der Figuren 5 bis 8 beinhalten die Betätigungsmittel ein Zahnrad 16 und ein L-förmiges Zahnstangenelement 17. Das Zahnrad 16 ist in einer herkömmlichen, nicht näher gezeigten Weise drehfest auf einer benutzerbetätigbaren Welle 18 montiert, die in ebenfalls herkömmlicher, nicht näher gezeigter Weise analog zur Welle 5 des Beispiels der Fig. 1 bis 4 drehbeweglich am Frischluftkanalgehäuse 4 gehalten ist. Die Welle 18 dient gleichzeitig als Kulissenzapfen, der durch eine L-förmige Kulissenbahn 19 hindurchgreift, die entlang einer oberen Seite des Zahnstangenelements 17 eingebracht ist. Mit parallelem Abstand zu dieser L-förmigen Kulissenbahn 19 ist am Zahnstangenelement 17 eine ebenfalls L-förmige Zahnungslinie 20 ausgebildet, mit der die Zahnung des Zahnrads 16 zusammenwirkt.

Am Zahnstangenelement 17 ist oberseitig in einem vom L-förmigen Bogenbereich beabstandeten Bereich der Klappenflügel 1 derart fixiert, dass er sich im wesentlichen parallel zum an den L-förmigen Bogenbereich anschließenden, langgestreckten Teil des Zahnstangenelements 17 erstreckt. Die Fixierung erfolgt dabei an einer gegenüber der Höhe der flügelseitigen Kulissenzapfen 13a, 13b beabstandeten Stelle des Klappenflügels 1.

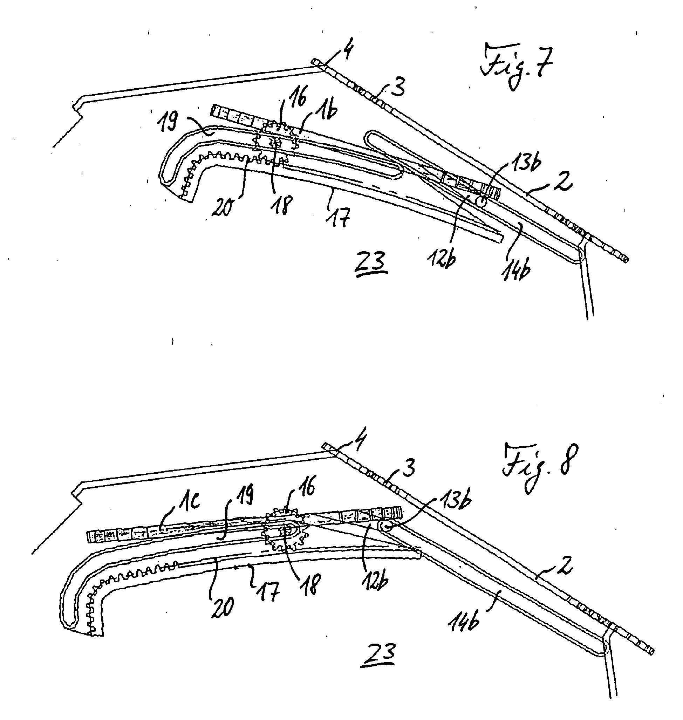

Diese Wahl der Betätigungs- und Kulissenführungsmittel hat eine zu derjenigen des Beispiels der Fig. 1 bis 4 im wesentlichen gleichartige Bewegungskinematik für das Verstellen des Klappenflügels 1 zwischen seiner in Fig. 6 gezeigten Schließposition 1a und seiner in Fig. 8 gezeigten Freigabeposition 1c zur Folge. Durch den L-förmigen Bogenbereich der Zahnungslinie 20 und der zugehörigen Kulissenbahn 19 im Zahnstangenelement 17 wirkt die über das Zahnrad 16 und das Zahnstangenelement 17 ausgeübte Schließkraft vorteilhafterweise im wesentlichen senkrecht zur Öffnungsebene auf den Klappenflügel ein, so dass einem eventuellen Staudruck von außen mit entsprechend geringer Gegenhaltekraft entgegengewirkt werden kann, um den Klappenflügel in seiner Schließposition 1a zu halten.

Zum Herausbewegen des Klappenflügels aus seiner Schließposition 1a wird das Zahnrad 16 in der gezeigten Pfeilrichtung D in Drehung versetzt, wodurch sich zunächst das Zahnstangenelement 17 mit dem Klappenflügel im wesentlichen senkrecht von der Öffnungsebene in einer hauptsächlichen Schwenkbewegungskomponente um die flügelseitigen Kulissenzapfen 13a, 13b wegbewegt und folglich der Klappenflügel ohne wesentliche Querkomponente und damit ohne störende Reibwiderstände vom Öffnungsrand 3 abgehoben wird. Im weiteren Verlauf der Öffnungsbewegung gelangen dann der L-Bogenbereich der Zahnungslinie 20 in den Wirkbereich des Zahnrads 16 und gleichzeitig der L-Bogenbereich der Kulissenbahn 19 in den Bereich der Welle 18, wodurch die Klappenflügelbewegung von der zuvor hauptsächlichen Schwenkbewegung in eine anschließende, hauptsächlich transversale Bewegung mit geringerer Schwenkbewegungskomponente übergeht, bis der Klappenflügel 1c schließlich seine Freigabeposition 1c seitlich oberhalb der Kanalöffnung 2 erreicht hat. Fig. 7 zeigt zum besseren Verständnis eine Zwischenstellung 1b des Klappenflügels, in welcher er die Öffnung 2 knapp halb freigibt.

Wie aus Fig. 8 ersichtlich, befindet sich auch in diesem Ausführungsbeispiel der Klappenflügel, wenn er seine Freigabeposition 1c einnimmt, ebenso wie seine zugehörigen Betätigungsmittel vollständig außerhalb des wirksamen Strömungsquerschnitts der Öffnung 2, was die oben zum Ausführungsbeispiel der Fig. 1 bis 4 erwähnten Vorteile ermöglicht, insbesondere hinsichtlich Ausnutzung des Kanalquerschnitts und Geräuschminimierung.

Es versteht sich, dass alternativ zu der gezeigten, in Querrichtung mittigen Positionierung eines einzelnen Zahnrades 16 mit zugehörigem Zahnstangenelement 17 zwei seitliche Zahnräder mit zwei zugehörigen Zahnstangenelementen entsprechend den beiden seitlichen Schwenkarmen 6a, 6b des Beispiels der Fig. 1 bis 4 vorgesehen sein können. Umgekehrt kann alternativ zu den beiden seitlichen Schwenkarmen 6a, 6b der Fig. 1 bis 4 ein einzelner Schwenkarm quermittig entsprechend der Lage des Zahnrades 16 im Beispiel der Fig. 5 bis 8 vorgesehen sein.

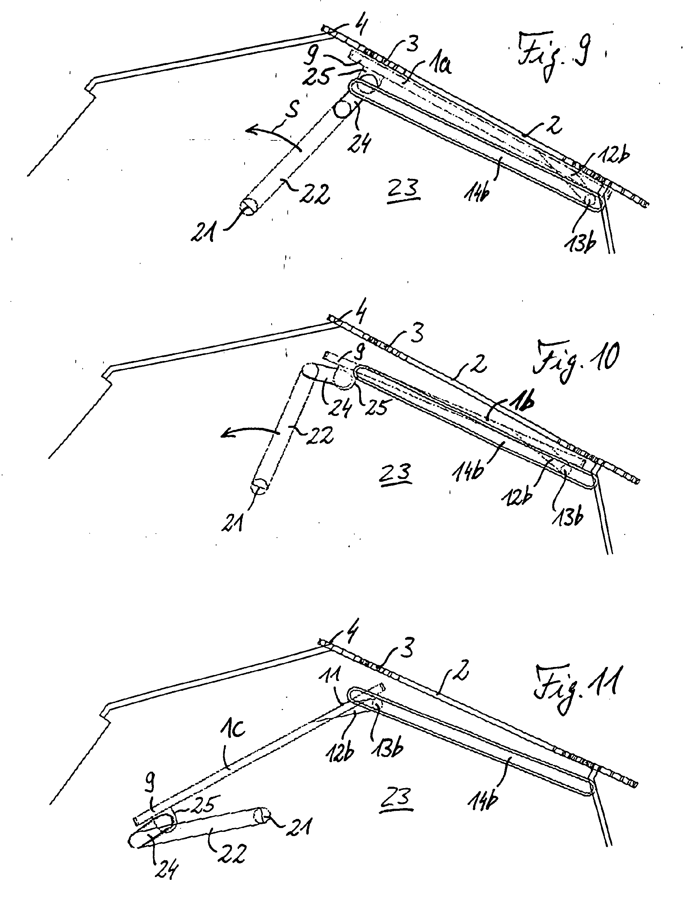

In den Fig. 9 bis 11 ist eine weitere Variante illustriert, die sich vom Beispiel der Fig. 1 bis 4 wiederum nur in der Art der Betätigungsmittel unterscheidet, so dass im übrigen auf die Beschreibung zu den Fig. 1 bis 4 verwiesen wird und übereinstimmende Bezugszeichen verwendet sind. Speziell beinhalten die Betätigungsmittel im Ausführungsbeispiel der Fig. 9 bis 11 auf jeder der zwei Kanalquerseiten, von denen der Einfachheit halber nur eine gezeigt ist, je einen gehäuseseitig um eine Drehachse 21 schwenkbeweglich angelenkten Schwenkarm 22, an den der Klappenflügel über einen Verbindungshebel 24 angekoppelt ist, wobei der Verbindungshebel 24 zum einen mit dem freien Ende des Schwenkarms 22 und zum anderen mit einem Fortsatz 25 des Klappenflügels gelenkig verbunden ist. Die beiden seitlichen Fortsätze 25 sind wiederum am in Richtung Freigabeposition 1c vorderen Seitenbereich 9 des Klappenflügels ausgebildet.

Die Hebelankopplung des Klappenflügels ist so gewählt, dass der Verbindungshebel 24 in der Verlängerungslinie des Schwenkarms 22 liegt, wenn sich der Klappenflügel in seiner Schließposition 1a gemäß Fig. 9 befindet. Dadurch ergeben sich zwei wesentliche Vorteile. Zum einen ist in dieser Stellung eine primär senkrecht zur Öffnungsebene verlaufende Wirkrichtung von Schwenkarm 22 und Verbindungshebel 24 gegeben, die eine Art Verriegelung des Klappenflügels in seiner Schließstellung 1a realisiert und dadurch wiederum ein gutes Gegenhalten gegen einen eventuell auftretenden Staudruck ermöglicht. Zum anderen hat diese spezielle Auslegung der Betätigungsmittel zusammen mit den Kulissenführungsmitteln auch in diesem Ausführungsbeispiel zur Folge, dass der Klappenflügel mit einer zur Öffnungsebene im wesentlichen senkrechten Bewegung aus seiner Schließposition 1a zum Öffnen herausbewegt wird und sich dadurch ohne signifikante Reib-widerstände vom Öffnungsrand 3 abhebt. Erst nachdem sich der Klappenflügel auf diese Weise mit einer hauptsächlichen Schwenkbewegungskomponente um die beiden Kulissenzapfen, von denen in den Fig. 9 bis 11 nur der eine Zapfen 13b zu erkennen ist, aus der Schließposition 1a herausbewegt und dadurch eine in Fig. 10 gezeigte Zwischenposition 1b mit teilweiser Öffnungsfreigabe eingenommen hat, wird er durch den weiteren Verlauf der Drehbewegung des Schwenkarms 22 mit dann stärkerer Transversalbewegungskomponente in seine Freigabeposition 1c seitlich oberhalb und damit außerhalb des Querschnitts der Öffnung 2 verbracht.

Wie aus der obigen Beschreibung vorteilhafter Ausführungsbeispiele deutlich wird, realisiert die Erfindung eine vergleichsweise einfach herstellbare Strömungskanalklappe, deren Klappenflügel einerseits einen Strömungskanal absperren und andererseits in eine den Öffnungsquerschnitt vollständig freigebende Freigabeposition seitlich neben der Kanalöffnung verbracht werden kann. Der Klappenflügel kann mit relativ geringem Kraftaufwand in seiner Schließposition gehalten werden. Er lässt sich aus seiner Schließposition mit primär senkrecht zur Öffnungsebene gerichteter Bewegungskomponente herausbewegen, was Reibwiderstände zwischen dem Klappenflügel und dem Kanalgehäuse, speziell dem Öffnungsrand und dort gegebenenfalls angeordneten Dichtungen, minimiert.

Es versteht sich, dass die erfindungsgemäße Strömungskanalklappe nicht nur in Frischluftkanälen, sondern auch in anderen Kanälen von Fahrzeugklimatisierungseinrichtungen und darüber hinaus in Strömungskanälen beliebiger anderer Einrichtungen einsetzbar ist, bei denen eine Kanalöffnung von einem ansteuerbaren, beweglichen Klappenflügel wahlweise abgesperrt oder freigegeben werden soll.

## Patentansprüche

1. Strömungskanalklappe, insbesondere für eine Fahrzeugklimatisierungseinrichtung, mit
- einem Klappenflügel (1), der zwischen einer Schließposition (1a), in welcher er eine Kanalöffnung (2) eines von einem Kanalgehäuse (4) definierten Strömungskanals (23), absperrt, und einer Freigabeposition (1c) beweglich ist, in welcher er die Kanalöffnung (2) freigibt,
- Betätigungsmitteln (6a,6b;22,24; 16 - 20), die mit dem Klappenflügel (1) zum Betätigen desselben gekoppelt sind, und
- Kulissenführungsmitteln (13a, 13b,14a,14b) zum Führen des Klappenflügels (1), die einerseits am Kanalgehäuse (4) und andererseits am Klappenflügel (1) vorgesehen sind,
- wobei die Kulissenführungsmittel (13a, 13b,14a,14b) und die Betätigungsmittel (6a,6b;22,24; 16 - 20) so ausgelegt sind, dass sie den Klappenflügel (1) in einer kombinierten Transversal- und Schwenkbewegung bewegen, sich der Klappenflügel (1) in der Freigabeposition (1c) seitlich neben der Kanalöffnung (2) befindet und sie den Klappenflügel (1) bei Betätigen aus seiner Schließposition (1a) zunächst mit einer zur Kanalöffnungsebene senkrechten Hauptkomponente der Transversal-/Schwenkbewegung herausbewegen,
**dadurch gekennzeichnet, dass**
der Klappenflügel (1) an dem in Richtung Freigabeposition (1c) hinteren Flügelseitenbereich (11) beidseits mit je einem Fortsatz (12a, 12b) versehen ist, von dem quer nach außen ein jeweiliger Kulissenzapfen (13a, 13 b) absteht und die Kulissenführungsmittel (13a, 13b,14a,14b) aus zwei sich bezüglich des Strömungskanals (23) gegenüberliegenden geradlinigen Kulissenbahnen (14a, 14b), die unter einem Winkel von weniger als 10° zur Ebene der abzusperrenden Kanalöffnung (2) mit geringem Abstand von dieser verlaufen und den in die jeweilige Kulissenbahn (14a, 14b) eingreifenden zugehörigen Kulissenzapfen (13a, 13b) bestehen, wobei der Klappenflügel (1) in einem vom Kulissenzapfen -Ankopplungsbereich beabstandeten, in Richtung Freigabeposition (1c) vorderen Bereich (9) des Klappenflügels (1) an die Betätigungsmittel (6a,6b; 22,24; 16 - 20) gekoppelt ist.

2. Strömungskanalklappe nach Anspruch 1, weiter **dadurch gekennzeichnet, dass** die Betätigungsmittel wenigstens einen Schwenkarm (6a, 6b; 22) beinhalten, an dessen freies Ende der Klappenflügel (1) drehbeweglich angelenkt ist.

3. Strömungskanalklappe nach Anspruch 2, weiter **dadurch gekennzeichnet, dass** der Klappenflügel (1) direkt oder über einen Verbindungshebel (24) an das freie Ende des Schwenkarms (6a, 6b; 22) angekoppelt ist.

4. Strömungskanalklappe nach Anspruch 3, weiter **dadurch gekennzeichnet, dass** der Verbindungshebel (24) eine bezüglich des Schwenkarms (22) gestreckte Stellung einnimmt, wenn sich der Klappenflügel (1) in seiner Schließposition (1 a) befindet.

5. Strömungskanalklappe nach Anspruch 1, weiter **dadurch gekennzeichnet, dass** die Betätigungsmittel (16-20) wenigstens ein drehfest auf einer Welle (18) montiertes Zahnrad (16) und ein Zahnstangenelement (17) mit einer mit dem Zahnrad (16) zusammenwirkenden Zahnungslinie (20) und mit einer weiteren Kulissenbahn (19) beinhalten, in welche die Welle (18) als Kulissenführungsglied eingreift.

6. Strömungskanalklappe nach Anspruch 5, weiter **dadurch gekennzeichnet, dass** die Zahnungslinie (20) und dazu korrespondierend die weitere Kulissenbahn (19) des Zahnstangenelements (17) L-förmig ausgebildet sind.

## Claims

1. Damper for a flow duct, in particular for a vehicle air conditioner, comprising:
- a damper blade (1) movable between a closed position (1a), in which it blocks a duct opening (2) of a flow duct (23) defined by a duct housing (4), and a release position (1c), in which it releases the duct opening (2),
- operating means (6a, 6b; 22, 24; 16-20) coupled to the damper blade (1) for its operation, and
- gate guidance means (13a, 13b, 14a, 14b) provided on the duct housing (4) and on the damper blade (1) for the guidance of the damper blade (1),
- wherein the gate guidance means (13a, 13b, 14a, 14b) and the operating means (6a, 6b; 22, 24; 16-20) are designed such that they move the damper blade (1) in a combined transversal and swivelling movement, that the damper blade (1) is placed at the side of the duct opening (2) in its release position (1c) and that they initially move the damper blade (1) from its closed position (1a) with a main component of the transversal/swivelling movement which acts at right angles to the plane of the duct opening,
**characterised in that**
the damper blade (1) is, in the blade side region (11) which is at the rear in the direction of the release position (1c), provided with an extension (12a, 12b) on either side, from each of which projects a gate pin (13a, 13b) transversely outwards, and **in that** the gate guidance means (13a, 13b, 14a, 14b) consist of two straight gate guideways (14a, 14b) disposed opposite one another relative to the flow duct (23), which extend at an angle of less than 10 degrees relative to the plane of the duct opening (2) to be blocked at a slight distance therefrom, and of the respective guide pins (13a, 13b) engaging the gate guideways (14a, 14b), wherein the damper blade (1) is coupled to the operating means (6a, 6b; 22, 24; 16-20) in a region (9) of the damper blade (1) which is at the front in the direction of the release position (1c) and placed at a distance from the gate pin coupling region.

2. Damper for a flow duct according to claim 1, further **characterised in that** the operating means include at least one swivelling arm (6a, 6b; 22), at the free end of which the damper blade (1) is rotatably hinged.

3. Damper for a flow duct according to claim 2, further **characterised in that** the damper blade (1) is coupled to the free end of the swivelling arm (6a, 6b; 22) either directly or via a connecting lever (24).

4. Damper for a flow duct according to claim 3, further **characterised in that** the connecting lever (24) adopts a position which extends the swivelling arm (22) if the damper blade (1) is in its closed position (1a).

5. Damper for a flow duct according to claim 1, further **characterised in that** the operating means (16-20) include at least one gear (16) non-rotatably mounted on a shaft (18) and a rack element (17) with a tooth line (20) acting together with the gear (16) and with a further gate guideway (19), which the shaft (18) acting as a gate guidance element engages.

6. Damper for a flow duct according to claim 5, further **characterised in that** the tooth line (20) and the corresponding further gate guideway (19) of the rack element (17) are L-shaped.

## Revendications

1. Volet de conduit d'écoulement, en particulier pour un dispositif de climatisation d'un véhicule, comprenant :
- une ailette de volet (1) qui est mobile entre une position de fermeture (1a) dans laquelle l'ailette de volet obture une ouverture de conduit (2) d'un conduit d'écoulement (23) défini par un carter de conduit (4), et une position d'ouverture (1c) dans laquelle l'ailette de volet ouvre l'ouverture de conduit (2),
- des moyens d'actionnement (6a, 6b ; 22, 24 ; 16 - 20) qui sont couplés à l'ailette de volet (1) pour son actionnement, et
- des moyens de guide de coulisse (13a, 13b, 14a, 14b) servant à guider l'ailette (1) du volet, moyens de guide de coulisse qui sont prévus d'une part sur le carter de conduit (4) et d'autre part sur l'ailette (1) du volet,
où les moyens de guide de coulisse (13a, 13b, 14a, 14b) et les moyens d'actionnement (6a, 6b ; 22, 24 ; 16 - 20) sont conçus de manière telle, qu'ils déplacent l'ailette (1) du volet suivant un mouvement transversal et pivotant combiné, que l'ailette (1) du volet, dans la position d'ouverture (1c), se trouve latéralement à côté de l'ouverture de conduit (2), et que lesdits moyens de guide de coulisse et d'actionnement dégagent l'ailette (1) du volet, en cas d'actionnement pour sortir de sa position de fermeture (1a), d'abord avec un composant principal du mouvement transversal / pivotant, perpendiculaire au plan de l'ouverture du conduit,
**caractérisé en ce que** l'ailette (1) du volet, sur la zone latérale arrière (11) de l'ailette, dans la direction de la position d'ouverture (1c), est dotée des deux côtés, à chaque fois d'un prolongement (12a, 12b) à partir duquel fait saillie un tourillon de coulisse respectif (13a, 13b), transversalement vers l'extérieur, et que les moyens de guide de coulisse (13a, 13b, 14a, 14b) se composent de deux pistes de coulisse (14a, 14b) rectilignes placées l'une en face de l'autre par rapport au conduit d'écoulement (23), pistes de coulisse qui s'étendent à faible distance de l'ouverture de conduit, suivant un angle de moins de 10° par rapport au plan de l'ouverture de conduit (2) à obturer, et se composent des tourillons de coulisse associés (13a, 13b) s'engageant dans la piste de coulisse respective (14a, 14b), où l'ailette (1) du volet, dans une zone avant (9) de l'ailette (1) du volet, en direction de la position d'ouverture (1c), espacée de la zone de couplage des tourillons de coulisse, est couplée aux moyens d'actionnement (6a, 6b ; 22, 24 ; 16 - 20).

2. Volet de conduit d'écoulement selon la revendication 1, **caractérisé en outre en ce que** les moyens d'actionnement comportent au moins un bras pivotant (6a, 6b ; 22) sur l'extrémité libre duquel est articulée, mobile en rotation, l'ailette (1) du volet.

3. Volet de conduit d'écoulement selon la revendication 2, **caractérisé en outre en ce que** l'ailette (1) du volet est couplée directement ou par un levier de liaison (24), à l'extrémité libre du bras pivotant (6a, 6b ; 22).

4. Volet de conduit d'écoulement selon la revendication 3, **caractérisé en outre en ce que** le levier de liaison (24) prend une position en longueur par rapport au bras pivotant (22) lorsque l'ailette (1) du volet se trouve dans sa position de fermeture (1a).

5. Volet de conduit d'écoulement selon la revendication 1, **caractérisé en outre en ce que** les moyens d'actionnement (16 - 20) comprennent au moins une roue dentée (16) montée solidaire en rotation sur un arbre (18), et un élément de crémaillère (17) comportant une ligne de denture (20) fonctionnant en association avec la roue dentée (16), et comprenant une autre piste de coulisse (19) dans laquelle s'engage l'arbre (18) servant d'élément de guide de coulisse.

6. Volet de conduit d'écoulement selon la revendication 5, **caractérisé en outre en ce que** la ligne de denture (20) et l'autre piste de coulisse (19) de l'élément de crémaillère (17), correspondant à la ligne de denture, sont configurées en forme de L.
